# EUROPÄISCHE PATENTSCHRIFT

(11) **EP 2 017 490 B1**
(45) Veröffentlichungstag und Bekanntmachung des Hinweises auf die Patenterteilung: **22.10.2014**
(21) Anmeldenummer: 08160546.1
(22) Anmeldetag: 16.07.2008
(51) Int. Cl.: F16D 15/00

(54) **Wasserpumpen-Trennkupplung**
Water pump separator coupling
Embrayage de coupure de pompe à eau

(30) Priorität: 17.07.2007 US 959903 P
(43) Veröffentlichungstag der Anmeldung: 21.01.2009
(73) Patentinhaber: Schaeffler Technologies GmbH & Co. KG, 91074 Herzogenaurach (DE)
(72) Erfinder: Hemphill, Jeffrey, Copley, SC 44321 (US); Jayaram, Mavinkal, Broadview Heights, OH 44147 (US); Hart, Scott, York, SC 29745 (US)

(56) Entgegenhaltungen:
- GB-A- 131 309
- GB-A- 1 032 542
- US-A- 2 570 515
- US-A- 3 158 241
- US-A- 3 209 993
- US-A- 3 279 571
- US-A- 4 060 158

## Beschreibung

### Gebiet der Erfindung

Die Erfindung bezieht sich allgemein auf Mittel zum Koppeln und Entkoppeln von zueinander drehbaren Bauteilen, und spezifischer auf eine Wasserpumpen-Trennkupplung.

### Hintergrund der Erfindung

Es ist wünschenswert, unnötige Vorrichtungen von einem Kraftfahrzeugmotor zu trennen, wenn sie nicht gebraucht werden, um Störeinflüsse zu vermeiden. Es ist zum Beispiel üblich, Klimakompressoren und Kühlgebläse zu trennen. In gleicher Weise verbessert das Trennen einer Motor-Wasserpumpe, wenn der Motor kalt ist, den Kraftstoffverbrauch und reduziert die Zeit, die der Motor braucht, um eine optimale Betriebstemperatur zu erreichen.

Es ist bekannt, elektrische Vorrichtungen zu verwenden, um Wasserpumpen zu steuern. U.S. Pat. Nr. 6,915,887 beschreibt eine elektromagnetische Kupplung zum Trennen einer Wasserpumpe. Mindestens ein Hersteller produziert eine elektrisch betriebene Wasserpumpe. Die Verwendung elektronischer Vorrichtungen und Steuerungen führt aber zu Kosten und Komplexität.

Es ist bekannt, thermostatische Vorrichtungen zu verwenden, um zueinander drehbare Bauteile zu koppeln und zu lösen. U.S. Pat. Nr. 2,570,515 beschreibt eine Vorrichtung für einen Kraftfahrzeug-Kühlerlüfter, bei der Klemmrollen mit Nockenvorsprüngen in ein Thermostat eingerückt werden, um die antreibenden und die angetriebenen Bauteile zu koppeln und zu entkoppeln. Wenn die Klemmrollenkupplung eingerückt ist, ist es aber schwierig, sie durch Anwendung der minimalen Kraft vom Thermostat zu den Vorsprüngen auszurücken. U.S. Pat. Nr. 6,619,454 beschreibt eine Trennvorrichtung, bei der Kugeln von einem Halter in Stellung gehalten werden, der sich axial bewegt, um die Kugeln freizugeben und den Antrieb zu trennen. Eine solche Vorrichtung ist vorgesehen, um im Fall einer Fehlfunktion zu trennen. Aufgrund großer Kontaktwinkel und großer Reibung ist es schwierig, die Eingangs- und Ausgangselemente unter Last wieder zu verbinden.

Es gibt daher seit langem einen Bedarf für eine Wasserpumpen-Trennkupplung mit niedrigen Kosten und geringer Komplexität. Es gibt auch einen Bedarf für eine Wasserpumpen-Trennkupplung mit niedriger Einrückreibung, die leicht in eine Thermostatvorrichtung einrücken und aus dieser ausgerückt werden kann.

### Kurze Zusammenfassung der Erfindung

Die vorliegende Erfindung weist allgemein eine Wasserpumpen-Trennkupplung auf, die einen ersten Laufring mit einem ersten Durchmesser und einem zweiten Durchmesser; einen zweiten Laufring mit in Umfangsrichtung angeordneten Rampen; ein erstes Rollelement, das radial zwischen dem ersten Laufring und dem zweiten Laufring angeordnet ist; und ein Einrückmittel umfasst, das angeordnet ist, um das Rollelement axial von einer ersten Stellung nahe dem ersten Durchmesser in eine zweite Stellung in Kontakt mit dem zweiten Durchmesser zu verschieben, um die Kupplung einzurücken. Gemäß einigen Merkmalen ist der erste Durchmesser kleiner als der zweite Durchmesser. Gemäß anderen Merkmalen ist der zweite Durchmesser kleiner als der erste Durchmesser. Gemäß einigen Merkmalen ist das Einrückmittel ein Schnappscheiben-Thermostat. Gemäß einigen Merkmalen wird das Einrückmittel axial nahe dem zweiten Laufring gehalten und verschiebt den zweiten Laufring axial. Gemäß einigen Merkmalen enthält die Kupplung einen Käfig, der in Umfangsrichtung mehrere erste Rollelemente positioniert.

Gemäß einigen Merkmalen weist die Kupplung eine Welle auf, die die Einrückmittel axial hält. Gemäß einigen Merkmalen ist der erste Laufring in die Welle eingebaut.

Gemäß einigen Merkmalen weist die Kupplung einen dritten Laufring, der mit einem Wasserpumpen-Flügelrad verbunden ist, und ein zweites Rollelement auf, das in einem Kanal zwischen dem zweiten Laufring und dem dritten Laufring angeordnet ist. Gemäß einigen Merkmalen sind der zweite Laufring und der dritte Laufring Stanzblech-Bauteile. Gemäß einigen Merkmalen weist die Kupplung Mittel zur Übertragung eines Nennmoments von der Welle zum Flügelrad auf. Gemäß einigen Merkmalen ist das Mittel eine Feder in Reibschluss mit der Welle und dem Flügelrad.

Die vorliegende Erfindung weist auch allgemein eine Wasserpumpen-Trennkupplung auf, die einen ersten Laufring; einen zweiten Laufring, der in Umfangsrichtung angeordnete Rampen aufweist, wobei die Rampen einen ersten Durchmesser und einen zweiten Durchmesser aufweisen, der axial zum ersten Durchmesser versetzt ist; ein erstes Rollelement, das radial zwischen dem ersten Laufring und dem zweiten Laufring angeordnet ist; und ein Einrückmittel umfasst, das angeordnet ist, um das Rollelement axial von einer ersten Stellung nahe dem ersten Durchmesser in eine zweite Stellung in Kontakt mit dem zweiten Durchmesser zu verschieben, um die Kupplung einzurücken. Es ist ein allgemeines Ziel der vorliegenden Erfindung, eine Wasserpumpen-Trennkupplung mit niedrigen Kosten und geringer Komplexität zu liefern. Es ist ein weiteres Ziel der vorliegenden Erfindung, eine Wasserpumpen-Trennkupplung mit geringer Einrückreibung zu liefern, die leicht in eine thermostatische Vorrichtung eingerückt und daraus ausgerückt werden kann. Dieses und andere Ziele und Vorteile der vorliegenden Erfindung gehen deutlich aus der nachfolgenden Beschreibung bevorzugter Ausführungsformen der Erfindung und den beiliegenden Zeichnungen und Ansprüchen hervor.

### Kurze Beschreibung der Zeichnungen

Die Art und die Arbeitsweise der vorliegenden Erfindung werden nun vollständiger in der folgenden ausführlichen Beschreibung der Erfindung zusammen mit den beiliegenden Zeichnungen beschrieben. Es zeigen:
- Figur 1: die obere Hälfte eines Querschnitts einer ersten Ausführungsform einer Wasserpumpen-Trennkupplung;
- Figur 1A: eine Teilendansicht der in Figur 1 gezeigten Wasserpumpen-Trennkupplung;
- Figur 2: eine Querschnittsansicht einer zweiten Ausführungsform einer Wasserpumpen-Trennkupplung und

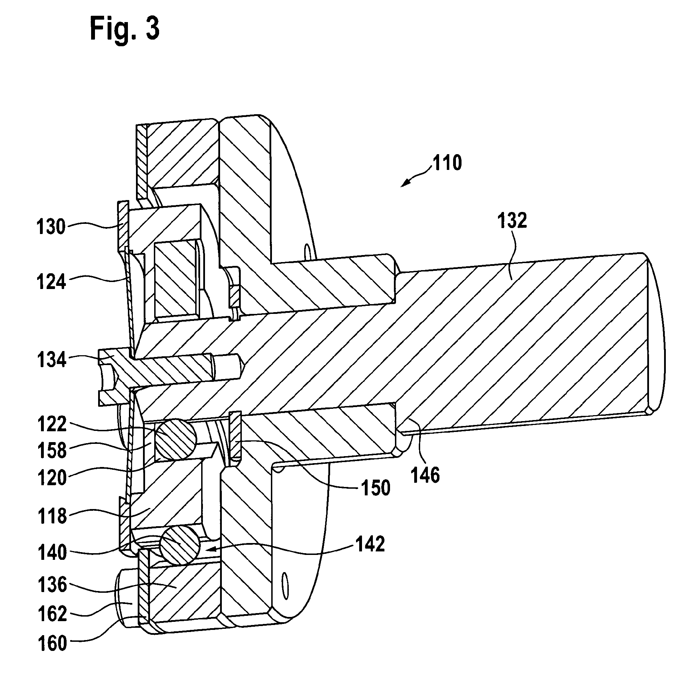

- Figur 3: eine Querschnittsansicht in Perspektive der Wasserpumpen-Trennkupplung aus Figur 2.

### Ausführliche Beschreibung der Erfindung

Zunächst wird darauf hingewiesen, dass gleiche Bezugszeichen in verschiedenen Zeichnungsansichten gleiche oder funktionell ähnliche Strukturelemente der Erfindung identifizieren. Während die vorliegende Erfindung bezüglich dessen beschrieben wird, was derzeit als die bevorzugten Merkmale angesehen wird, ist es klar, dass die Erfindung, wie sie beansprucht wird, nicht auf die offenbarten Merkmale beschränkt ist.

Außerdem ist es klar, dass diese Erfindung nicht auf die besonderen beschriebenen Verfahrensweise, Materialien und Veränderungen beschränkt ist und als solche natürlich variieren kann. Es ist auch klar, dass die hier verwendete Terminologie nur der Beschreibung besonderer Merkmale dient und den Bereich der vorliegenden Erfindung nicht einschränken soll, der nur durch die beiliegenden Ansprüche begrenzt wird.

Wenn nicht anders definiert, haben alle hier verwendeten technischen und wissenschaftlichen Begriffe die gleiche Bedeutung, wie sie üblicherweise von einem Durchschnittsfachmann des Gebiets verstanden wird, zu dem diese Erfindung gehört. Obwohl beliebige Verfahren, Vorrichtungen oder Materialien, die den hier beschriebenen ähnlich oder gleichwertig sind, beim Ausüben oder Testen der Erfindung verwendet werden können, werden nun die bevorzugten Verfahren, Vorrichtungen und Materialien beschrieben.

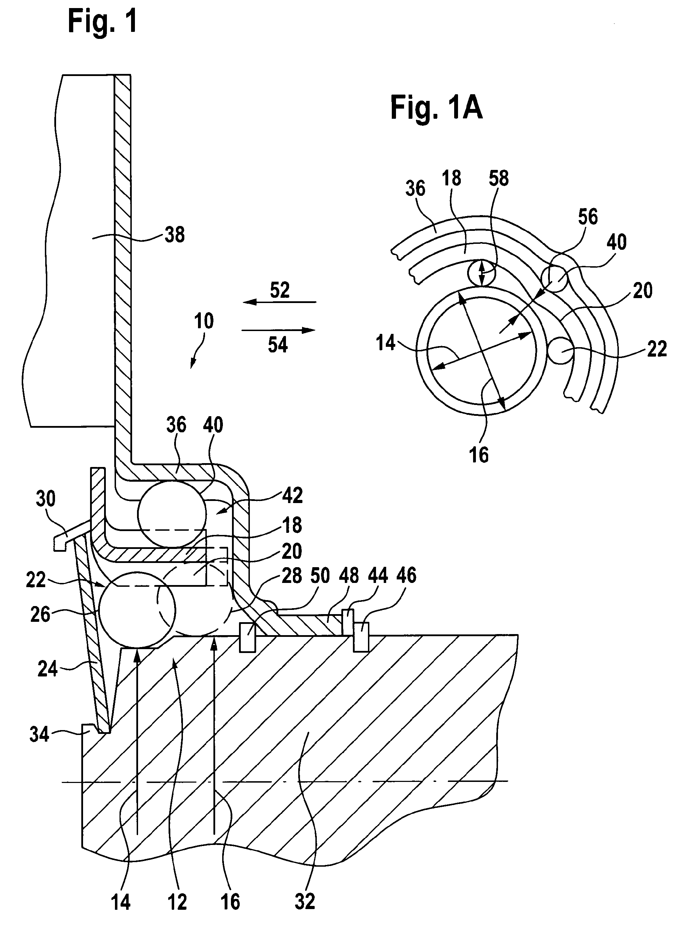

Figur 1 ist die obere Hälfte einer Querschnittsansicht der ersten Ausführungsform einer Wasserpumpen-Trennkupplung 10. Die Kupplung 10 umfasst einen ersten Laufring 12 mit einem ersten Durchmesser 14 und einem zweiten Durchmesser 16; einen zweiten Laufring 18 mit Rampen 20, die in Umfangsrichtung angeordnet sind; und mindestens ein Rollelement 22, das radial zwischen dem ersten Laufring 12 und dem zweiten Laufring 18 angeordnet ist. Gemäß einigen Merkmalen ist das Rollelement 22 eine Metallkugel. Das Einrückmittel 24 ist angeordnet, um das Rollelement 22 axial von der ersten Stellung 26 nahe dem ersten Durchmesser 14 in die zweite Stellung 28 (gestrichelt gezeigt) in Kontakt mit dem zweiten Durchmesser 16 zu verschieben, um die Kupplung 10 einzurücken. Obwohl der Durchmesser 14 kleiner als der Durchmesser 16 gezeigt ist, liegt eine Gestaltung, bei der der Durchmesser 16 kleiner ist als der Durchmesser 14, d.h., wenn der erste Laufring 12 radial außerhalb des Rollelements 22 angeordnet wäre, im Rahmen der Erfindung.

Ein bevorzugtes Einrückmittel 24 ist ein Schnappscheiben-Thermostat, obwohl andere Mittel wie Motorvakuum, Motoröl, oder Kontaktreibung im Rahmen der Erfindung liegen. Gemäß einigen Merkmalen wird das Einrückmittel 24 durch einen Vorsprung 30 axial dem zweiten Laufring 18 benachbart gehalten und verschiebt den zweiten Laufring 18 axial. Gemäß einigen Merkmalen positioniert ein Käfig (nicht dargestellt) in Umfangsrichtung mehrere erste Rollelemente 22.

Die Welle 32 kann von einem Motor angetrieben werden (nicht dargestellt). Zum Beispiel kann eine von einem Motorriemen (nicht dargestellt) angetriebene Riemenscheibe (nicht dargestellt) an der Welle 32 befestigt sein. Lager (nicht dargestellt) tragen die Welle 32 im Motor. Die verengte Zone 34 der Welle 32 hält axial die Einrückmittel 24 zurück, so dass die axiale Verschiebung des Mittels 24 das Rollelement 22 zwischen Abschnitten des Laufrings 12 bewegt. Gemäß einigen Merkmalen ist der Laufring 12 in die Welle 32 eingebaut. Obwohl eine verengte Zone 34 gezeigt ist, könnten andere Verfahren wie z.B. Verkerben, Schweißen, Schnappverschluss, Verriegelung, Nietverbindung verwendet werden, um das Mittel 24 auf der Welle 32 zu halten.

Die Kupplung 10 weist auch einen dritten Laufring 36, der mit dem Wasserpumpe-Flügelrad 38 verbunden ist, und ein zweites Rollelement 40 auf, das im Kanal 42 angeordnet ist, der zwischen dem zweiten Laufring 18 und dem dritten Laufring 36 gebildet ist. Das Rollelement 40 überträgt vorteilhafterweise ein Drehmoment vom Laufring 18 auf den Laufring 36, ermöglicht aber trotzdem dem Laufring 18, sich bezüglich des Laufrings 36 mit geringer Reibung axial zu bewegen. Die Kombination von Laufring 18, Laufring 36 und Rollelement 40 kann eine Ball-Spline-Anordnung sein. Gemäß einigen Merkmalen sind der Laufring 18 und der Laufring 36 Stanzblech-Bauteile, obwohl sie aus einem beliebigen Material und gemäß einem im Stand der Technik bekannten Herstellungsverfahren hergestellt werden können.

Die Kupplung 10 kann auch Mittel aufweisen, um ein Nennmoment von der Welle 32 auf das Flügelrad 38 zu übertragen. Gemäß einigen Merkmalen ist das Mittel eine Feder 44 in Reibschluss mit einem ersten Schnappring 46 auf der Welle 32 und dem Flügelradgehäuse 48. Ein zweiter Schnappring 50 hält die axiale Stellung des Gehäuses 48, so dass eine axiale Kraft von der Feder 44 einen Reibungskontakt erzeugt, um das Flügelrad 38 zu drehen. Die Welle 32 und das Flügelrad 38 sind in Schleifkontakt; d.h., die Welle 32 und das Flügelrad 38 drehen nicht mit der gleichen Geschwindigkeit, wenn die Kupplung 10 ausgerückt ist. Die Drehung des Flügelrads 38 bewegt vorteilhafterweise eine minimale Fluidmenge durch den Motor (nicht dargestellt) und in Kontakt mit dem Mittel 24, wodurch das Einrücken der Kupplung 10 ermöglicht wird, wenn die Temperatur einen vorbestimmten Grenzwert erreicht.

Die Arbeitsweise der Kupplung 10 wird nun beschrieben. Figur 1 zeigt die Kupplung 10 in einem anfangs ausgerückten Zustand. Das Einrückmittel 24 ist derart angeordnet, dass ein Kontakt mit dem Vorsprung 30 den zweiten Laufring 18 in die Richtung 52 antreibt. Das erste Rollelement 22 ist nahe einem Abschnitt des ersten Laufrings 12 mit dem Durchmesser 14. In einem ausgerückten Zustand kann das Rollelement 22 nicht den Laufring 12 kontaktieren aufgrund von Drehkräften, die das Element 22 radial nach außen ziehen, wodurch vorteilhafterweise die Reibung verringert wird. Der Reibungskontakt treibt Fluid im ausgerückten Zustand, wie oben beschrieben.

Wenn das Fluid eine vorbestimmte Temperatur erreicht, bewegt sich der äußere Durchmesser des Einrückmittels 24 in die Richtung 54, wodurch das Rollelement 22 und der zweite Laufring 18 in die Richtung 54 verschoben werden. Gemäß einigen Merkmalen ist die Bewegung des Mittels 24 eine Durchschlagbewegung eines Bimetallschnappscheiben-Thermostats. Der Rollkontakt zwischen dem Rollelement 22 und den Laufringen 12 und 18 und zwischen dem Rollelement 40 und den Laufringen 18 und 36 verringert vorteilhafterweise die Reibung. Während das Element 22 in die Richtung 54 bewegt wird, wird das Element 22 in Kontakt mit einem Abschnitt des Laufrings 12 mit dem Durchmesser 16 bewegt. Eine radiale Bewegung des Elements 22 nach außen bewegt es in Kontakt mit dem Laufring 18. Während das Element 22 sich gegen Rampen 20 des Laufrings 18 verkeilt, übertragen die Elemente 22 ein Drehmoment vom Laufring 12 zum Laufring 18, wodurch die Kupplung 10 eingerückt wird.

Wenn die Fluidtemperatur reduziert wird, bewegt sich der äußere Durchmesser des Einrückmittels 24 in die Richtung 52, wodurch der zweite Laufring 18 in die Richtung 52 verschoben wird. Das Rollelement 22 wird durch Kontakt mit dem Laufring 18 in die Richtung 52 gerollt. Wenn das Element 22 den Abschnitt des Laufrings 12 mit dem Durchmesser 14 erreicht, wird die Kupplung ausgerückt. Figur 1A ist eine Teilendansicht der Kupplung 10 in der Richtung 54 gesehen. Der Abstand 56 zwischen einem Abschnitt des ersten Laufrings 12 mit dem Durchmesser 14 und dem zweiten Laufring 18 ist geringfügig größer als der Durchmesser 58 des Rollelements 22. Dies gewährleistet, dass das Rollelement 22 kein Drehmoment überträgt, wenn es axial nahe dem Durchmesser 14 positioniert ist. Wenn das Rollelement 22 den Abschnitt des Laufrings 12 mit dem Durchmesser 16 kontaktiert, kontaktiert das Element 22 die Rampe 20 des Laufrings 18, wodurch die Verkeilungswirkung und die Drehmomentübertragung ausgelöst werden.

Eine zweite Ausführungsform einer Wasserpumpen-Trennkupplung (nicht dargestellt) umfasst einen ersten Laufring; einen zweiten Laufring mit Rampen, die in Umfangsrichtung angeordnet sind, wobei die Rampen einen ersten Durchmesser und einen zweiten Durchmesser aufweisen, der axial zum ersten Durchmesser versetzt ist; ein erstes Rollelement, das radial zwischen dem ersten Laufring und dem zweiten Laufring angeordnet ist; und ein Einrückmittel, das angeordnet ist, um das Rollelement von einer ersten Stellung nahe dem ersten Durchmesser in eine zweite Stellung in Kontakt mit dem zweiten Durchmesser axial zu verschieben, um die Kupplung einzurücken. Der Radius der Rampen variiert nicht nur in Umfangsrichtung, sondern auch in axialer Richtung. Das heißt, eine oben erörterte radiale Verschiebung des Rollelements 22 durch die Durchmesser 14 und 16 auf dem Laufring 12 wird durch eine komplexe Rampenform ersetzt, derart, dass der erste Laufring in dieser Ausführungsform keine variierenden Durchmesser haben muss.

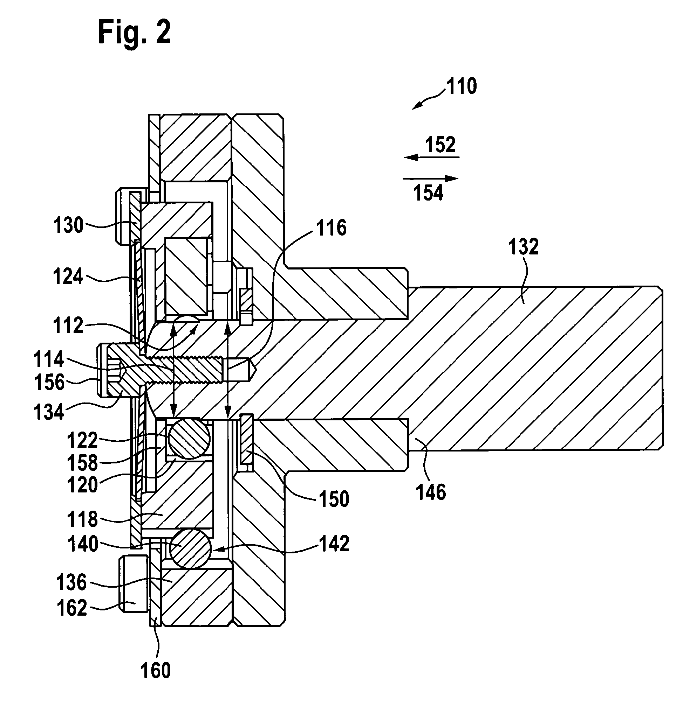

Figur 2 ist eine Querschnittsansicht einer dritten Ausführungsform der Wasserpumpen-Trennkupplung 110. Die Kupplung 110 umfasst einen ersten Laufring 112 mit einem ersten Durchmesser 114 und einem zweiten Durchmesser 116; einen zweiten Laufring 118 mit Rampen 120, die in Umfangsrichtung angeordnet sind; und mindestens ein Rollelement 122, das radial zwischen dem ersten Laufring 112 und dem zweiten Laufring 118 angeordnet ist. Das Einrückmittel 124 ist angeordnet, um das Rollelement 122 von einer ersten Stellung nahe dem ersten Durchmesser 114 in eine zweite Stellung (nicht dargestellt) in Kontakt mit dem zweiten Durchmesser 116 axial zu verschieben, um die Kupplung 110 einzurücken. Obwohl der Durchmesser 114 kleiner als der Durchmesser 116 gezeigt ist, liegt eine Gestaltung, bei der der Durchmesser 116 kleiner ist als der Durchmesser 114, d.h., wenn der erste Laufring 112 radial außerhalb des Rollelements 122 angeordnet wäre, im Rahmen der Erfindung.

Ein bevorzugtes Einrückmittel 124 ist ein Schnappscheiben-Thermostat, obwohl andere Mittel wie Motorvakuum, Motoröl oder Kontaktreibung im Rahmen der Erfindung liegen. Gemäß einigen Merkmalen wird das Einrückmittel 124 von der Platte 130 und dem Befestigungsmittel 156 so positioniert, dass es axial dem zweiten Laufring 118 benachbart ist. Gemäß einigen Merkmalen verschiebt das Einrückmittel 124 axial den zweiten Laufring 118. Gemäß einigen Merkmalen positioniert ein Käfig (nicht dargestellt) mehrere der ersten Rollelemente 122 in Umfangsrichtung.

Die Welle 132 kann von einem Motor (nicht dargestellt) angetrieben werden. Zum Beispiel kann eine Riemenscheibe (nicht dargestellt), die von einem Motorriemen (nicht dargestellt) angetrieben wird, an der Welle 132 befestigt werden. Lager (nicht dargestellt) tragen die Welle 132 im Motor. Ein in die Welle 132 eingeschraubtes Befestigungsmittel 134 hält axial das Einrückmittel 124 derart, dass eine axiale Verschiebung des Mittels 124 das Rollelement 122 zwischen Abschnitten des Laufrings 112 bewegt. Gemäß einigen Merkmalen ist der Laufring 112 in die Welle 132 eingebaut. Obwohl das Befestigungsmittel 134 dargestellt ist, könnten andere Verfahren wie z.B. Verkerben, Schweißen, Schnappverschluss, Nietverbindung verwendet werden, um das Mittel 124 auf der Welle 132 zu halten.

Die Kupplung 110 umfasst auch einen dritten Laufring 136, der mit einem Wasserpumpe-Flügelrad (nicht dargestellt) verbunden ist, und ein zweites Rollelement 140, das in dem Kanal 142 angeordnet ist, der zwischen dem zweiten Laufring 118 und dem dritten Laufring 136 geformt ist. Das Rollelement 140 überträgt vorteilhafterweise ein Drehmoment vom Laufring 118 auf den Laufring 136, ermöglicht es aber trotzdem dem Laufring 118, sich axial bezüglich des Laufrings 136 mit geringer Reibung zu bewegen. Die Kombination von Laufring 118, Laufring 136 und Rollelement 140 kann eine Ball-Spline-Anordnung sein.

Die Kupplung 110 ist auf der Welle 132 über die radiale Fläche 146 und den Schnappring 150 axial positioniert. Die axiale Bewegung des Rollelements 122 wird durch den Flanschabschnitt 158 des zweiten Laufrings 118 begrenzt. Die axiale Bewegung des Rollelements 140 wird von der Platte 160 begrenzt, die am dritten Laufring 136 durch das Befestigungsmittel 162 befestigt ist. Der Betrieb der Kupplung 110 ist wie für die Kupplung 10 beschrieben.

So ist klar, dass die Ziele der Erfindung wirksam erreicht werden, obwohl Veränderungen und Abänderungen der Erfindung für den Durchschnittsfachmann offensichtlich sein sollten, ohne den Rahmen der beanspruchten Erfindung zu verlassen. Obwohl die Erfindung unter Bezug auf eine spezifische bevorzugte Ausführungsform beschrieben wurde, ist es klar, das Veränderungen durchgeführt werden können, ohne den Rahmen der beanspruchten Erfindung zu verlassen.

## Patentansprüche

1. Wasserpumpen-Trennkupplung (110), die aufweist:
einen ersten Laufring (112) mit einem ersten Durchmesser (114) und einem zweiten Durchmesser (116);
einen zweiten Laufring (118) mit Rampen (120), die in Umfangsrichtung angeordnet sind;
ein erstes Rollelement (122), das radial zwischen dem ersten Laufring (112) und dem zweiten Laufring angeordnet ist dadurchgekennzeichnet, dass ein Einrückmittel (124), das angeordnet ist, um das Rollelement axial von einer ersten Stellung nahe dem ersten Durchmesser (114) in eine zweite Stellung in Kontakt mit dem zweiten Durchmesser (116) zu verschieben, um die Kupplung (110) einzurücken.

2. Wasserpumpen-Trennkupplung nach Anspruch 1, bei der der erste Durchmesser (114) kleiner ist als der zweite Durchmesser (116).

3. Wasserpumpen-Trennkupplung nach Anspruch 1, bei der der zweite Durchmesser (16) kleiner ist als der erste Durchmesser (114).

4. Wasserpumpen-Trennkupplung nach Anspruch 1, bei der das Einrückmittel ein Schnappscheiben-Thermostat ist.

5. Wasserpumpen-Trennkupplung nach Anspruch 1, bei der das Einrückmittel axial dem zweiten Laufring benachbart gehalten wird und den zweiten Laufring (118) axial verschiebt.

6. Wasserpumpen-Trennkupplung nach Anspruch 1, die weiter einen Käfig aufweist, wobei der Käfig mehrere der ersten Rollelemente (122) in Umfangsrichtung positioniert.

7. Wasserpumpen-Trennkupplung nach Anspruch 1, die weiter eine Welle (132) aufweist.

8. Wasserpumpen-Trennkupplung nach Anspruch 6, bei der das Einrückmittel axial von der Welle gehalten wird.

9. Wasserpumpen-Trennkupplung nach Anspruch 6, bei der der erste Laufring (112) in die Welle eingebaut ist.

10. Wasserpumpen-Trennkupplung nach Anspruch 6, die weiter einen dritten Laufring (136), der mit einem Wasserpumpe-Flügelrad verbunden ist, und ein zweites Rollelement (140) aufweist, das in einem Kanal (142) angeordnet ist, der zwischen dem zweiten Laufring (118) und dem dritten Laufring (136) geformt ist.

11. Wasserpumpen-Trennkupplung nach Anspruch 10, bei der der zweite Laufring und der dritte Laufring Stanzblech-Bauteile sind.

12. Wasserpumpen-Trennkupplung nach Anspruch 10, die weiter ein Mittel aufweist, um ein Nennmoment von der Welle auf das Flügelrad zu übertragen.

13. Wasserpumpen-Trennkupplung nach Anspruch 12, bei der das Mittel eine Feder (44) in Reibschluss mit der Welle und dem Flügelrad ist.

14. Wasserpumpen-Trennkupplung (10), die aufweist:
einen in eine Welle (32) eingebauten ersten Laufring (12), der einen ersten Durchmesser (14) hat, der geringer ist als ein zweiter Durchmesser (16);
einen zweiten Laufring (18) mit Rampen, die in Umfangsrichtung angeordnet sind;
mehrere erste Rollelemente (22), die radial zwischen dem ersten Laufring und dem zweiten Laufring angeordnet sind;
ein Schnappscheiben-Thermostat, das axial von der Welle gehalten wird und dem zweiten Laufring benachbart ist, und das angeordnet ist, um den zweiten Laufring und die mehreren Rollelemente von einer ersten Stellung nahe dem ersten Durchmesser in eine zweite Stellung in Kontakt mit dem zweiten Durchmesser axial zu verschieben, um die Kupplung einzurücken;
einen Käfig, der angeordnet ist, um die mehreren ersten Rollelemente in Umfangsrichtung zu positionieren;
einen dritten Laufring, der mit einem Wasserpumpe-Flügelrad verbunden ist; und
ein zweites Rollelement, das in einem Kanal angeordnet ist, der zwischen dem zweiten Laufring und dem dritten Laufring geformt wird.

15. Wasserpumpen-Trennkupplung nach Anspruch 14, bei der zweite Laufring und der dritte Laufring Stanzblech-Bauteile sind.

16. Wasserpumpen-Trennkupplung nach Anspruch 14, die weiter ein Mittel zur Übertragung eines Nennmoments von der Welle auf das Flügelrad aufweist.

17. Wasserpumpen-Trennkupplung nach Anspruch 16, bei der das Mittel eine Feder in Reibschluss mit der Welle und dem Flügelrad ist.

18. Verfahren zum Betätigen einer Wasserpumpen-Trennkupplung, das die folgenden Schritte aufweist:
Bereitstellen eines ersten Laufrings mit einem ersten Durchmesser und einem zweiten Durchmesser;
Bereitstellen eines zweiten Laufrings mit Rampen in Umfangsrichtung;
Bereitstellen eines ersten Rollelements radial zwischen dem ersten Laufring und dem zweiten Laufring, **dadurch gekennzeichnet, dass**
axiales Verschieben des Rollelements von einer ersten Stellung in Kontakt mit dem ersten Durchmesser in eine zweite Stellung in Kontakt mit dem zweiten Durchmesser, um eine Kupplung einzurücken.

19. Verfahren nach Anspruch 14, bei dem das Rollelement axial von einem Schnappscheiben-Thermostat verschoben wird.

20. Verfahren nach Anspruch 19, das weiter die folgenden Schritte aufweist:
Bereitstellen eines dritten Laufrings;
Bereitstellen eines zweiten Rollelements radial zwischen dem zweiten Laufring und dem dritten Laufring; und
axiales Verschieben des zweiten Laufrings, um die Kupplung einzurücken.

21. Wasserpumpen-Trennkupplung, die aufweist:
einen ersten Laufring;
einen zweiten Laufring mit Rampen, die in Umfangsrichtung angeordnet sind, wobei die Rampen einen ersten Durchmesser und einen zweiten Durchmesser haben, der axial zum ersten Durchmesser versetzt ist;
ein erstes Rollelement, das radial zwischen dem ersten Laufring und dem zweiten Laufring angeordnet ist; und
ein Einrückmittel, das angeordnet ist, um das Rollelement axial von einer ersten Stellung nahe dem ersten Durchmesser in eine zweite Stellung in Kontakt mit dem zweiten Durchmesser zu verschieben, um die Kupplung einzurücken.

## Claims

1. Water pump separating coupling (110) which has:
a first running ring (112) with a first diameter (114) and a second diameter (116);
a second running ring (118) with ramps (120) which are arranged in the circumferential direction;
a first rolling element (122) which is arranged radially between the first running ring (112) and the second running ring,
**characterized by** an engagement means (124) which is arranged to displace the first rolling element axially from a first position close to the first diameter (114) into a second position in contact with the second diameter (116), in order to engage the coupling (110).

2. Water pump separating coupling according to Claim 1, in which the first diameter (114) is smaller than the second diameter (116).

3. Water pump separating coupling according to Claim 1, in which the second diameter (116) is smaller than the first diameter (114).

4. Water pump separating coupling according to Claim 1, in which the engagement means is a snap disc thermostat.

5. Water pump separating coupling according to Claim 1, in which the engagement means is held axially adjacently with respect to the second running ring and displaces the second running ring (118) axially.

6. Water pump separating coupling according to Claim 1, which has, furthermore, a cage, the cage positioning a plurality of the first rolling elements (122) in the circumferential direction.

7. Water pump separating coupling according to Claim 1, which has, furthermore, a shaft (132).

8. Water pump separating coupling according to Claim 7, in which the engagement means is held axially by the shaft.

9. Water pump separating coupling according to Claim 7, in which the first running ring (112) is installed into the shaft.

10. Water pump separating coupling according to Claim 7, which has, furthermore, a third running ring (136) which is connected to a water pump impeller wheel and a second rolling element (140) which is arranged in a channel (142) which is formed between the second running ring (118) and the third running ring (136).

11. Water pump separating coupling according to Claim 10, in which the second running ring and the third running ring are punched metal sheet components.

12. Water pump separating coupling according to Claim 10, which has, furthermore, a means for transmitting a nominal torque from the shaft to the impeller wheel.

13. Water pump separating coupling according to Claim 12, in which the means is a spring (44) in a frictionally locking connection with the shaft and the impeller wheel.

14. Water pump separating coupling (10) which has:
a first running ring (12) which is installed into a shaft (32) and has a first diameter (14) and a second diameter (16), the first diameter being smaller than the second diameter;
a second running ring (18) with ramps which are arranged in the circumferential direction;
a plurality of first rolling elements (22) which are arranged radially between the first running ring and the second running ring;
a snap disc thermostat which is held axially by the shaft, is adjacent with respect to the second running ring and is arranged to axially displace the second running ring and the plurality of first rolling elements from a first position close to the first diameter into a second position in contact with the second diameter, in order to engage the coupling;
a cage which is arranged to position the plurality of first rolling elements in the circumferential direction;
a third running ring which is connected to a water pump impeller wheel; and a second rolling element which is arranged in a channel which is formed between the second running ring and the third running ring.

15. Water pump separating coupling according to Claim 14, in which the second running ring and the third running ring are punched metal sheet components.

16. Water pump separating coupling according to Claim 14, which has, furthermore, a means for transmitting a nominal torque from the shaft to the impeller wheel.

17. Water pump separating coupling according to Claim 16, in which the means is a spring in a frictionally locking connection with the shaft and the impeller wheel.

18. Method for actuating a water pump separating coupling, which method has the following steps:
provision of a first running ring with a first diameter and a second diameter;
provision of a second running ring with ramps in the circumferential direction;
provision of a first rolling element radially between the first running ring and the second running ring;
**characterized by** axial displacement of the rolling element from a first position in contact with the first diameter into a second position in contact with the second diameter, in order to engage the coupling.

19. Method according to Claim 16, in which the rolling element is displaced axially by a snap disc thermostat.

20. Method according to Claim 19, which has, furthermore, the following steps:
provision of a third running ring;
provision of a second rolling element radially between the second running ring and the third running ring;
and axial displacement of the second running ring, in order to engage the coupling.

21. Water pump separating coupling which has:
a first running ring;
a second running ring with ramps which are arranged in the circumferential direction, the ramps having a first diameter and a second diameter which is offset axially with respect to the first diameter;
a first rolling element which is arranged radially between the first running ring and the second running ring;
and an engagement means which is arranged to displace the rolling element axially from a first position close to the first diameter into a second position in contact with the second diameter, in order to engage the coupling.

## Revendications

1. Embrayage de coupure de pompe à eau (110), présentant :
une première bague de roulement (112) ayant un premier diamètre (114) et un deuxième diamètre (116) ;
une deuxième bague de roulement (118) avec des rampes (120) qui sont disposées dans la direction périphérique ;
un premier élément de rouleau (122) qui est dispose radialement entre la première bague de roulement (112) et la deuxième bague de roulement,
**caractérisé par** un moyen d'embrayage (124) qui est disposé de manière à déplacer le premier élément de rouleau axialement d'une première position à proximité du premier diamètre (114) dans une deuxième position en contact avec le deuxième diamètre (116), afin d'embrayer l'embrayage (110).

2. Embrayage de coupure de pompe à eau selon la revendication 1, dans lequel le premier diamètre (114) est inférieur au deuxième diamètre (116).

3. Embrayage de coupure de pompe à eau selon la revendication 1, dans lequel le deuxième diamètre (116) est inférieur au premier diamètre (114).

4. Embrayage de coupure de pompe à eau selon la revendication 1, dans lequel le moyen d'embrayage est un thermostat à plaque à déclic.

5. Embrayage de coupure de pompe à eau selon la revendication 1, dans lequel le moyen d'embrayage est retenu axialement à côté de la deuxième bague de roulement et déplace axialement la deuxième bague de roulement (118).

6. Embrayage de coupure de pompe à eau selon la revendication 1, présentant en outre une cage, la cage positionnant plusieurs des premiers éléments de rouleaux (122) dans la direction périphérique.

7. Embrayage de coupure de pompe à eau selon la revendication 1, présentant en outre un arbre (132).

8. Embrayage de coupure de pompe à eau selon la revendication 7, dans lequel le moyen d'embrayage est retenu axialement par l'arbre.

9. Embrayage de coupure de pompe à eau selon la revendication 7, dans lequel la première bague de roulement (112) est incorporée dans l'arbre.

10. Embrayage de coupure de pompe à eau selon la revendication 7, présentant en outre une troisième bague de roulement (136) qui est connectée à une roue à aubes de la pompe à eau et un deuxième élément de rouleau (140) qui est disposé dans un canal (142) formé entre la deuxième bague de roulement (118) et la troisième bague de roulement (136).

11. Embrayage de coupure de pompe à eau selon la revendication 10, dans lequel la deuxième bague de roulement et la troisième bague de roulement sont des composants en tôle estampée.

12. Embrayage de coupure de pompe à eau selon la revendication 10, présentant en outre un moyen pour transférer un couple nominal de l'arbre à la roue à aubes.

13. Embrayage de coupure de pompe à eau selon la revendication 12, dans lequel le moyen est un ressort (44) en liaison par friction avec l'arbre et la roue à aubes.

14. Embrayage de coupure de pompe à eau (10), présentant :
une première bague de roulement (12) incorporée dans un arbre (32) avec un premier diamètre (14) et un deuxième diamètre (16), le premier diamètre étant inférieur au deuxième diamètre ;
une deuxième bague de roulement (18) avec des rampes qui sont disposées dans la direction périphérique ;
plusieurs premiers éléments de rouleaux (22) qui sont disposés radialement entre la première bague de roulement et la deuxième bague de roulement ;
un thermostat à plaque à déclic qui est retenu axialement par l'arbre, qui est adjacent à la deuxième bague de roulement et qui est disposé de manière à déplacer axialement la deuxième bague de roulement et les plusieurs premiers éléments de rouleaux d'une première position à proximité du premier diamètre dans une deuxième position en contact avec le deuxième diamètre afin d'embrayer l'embrayage ;
une cage disposée de manière à positionner les plusieurs premiers éléments de rouleaux dans la direction périphérique ;
une troisième bague de roulement qui est connectée à une roue à aubes de la pompe à eau ; et un deuxième élément de rouleau qui est disposé dans un canal formé entre la deuxième bague de roulement et la troisième bague de roulement.

15. Embrayage de coupure de pompe à eau selon la revendication 14, dans lequel la deuxième bague de roulement et la troisième bague de roulement sont des composants en tôle estampée.

16. Embrayage de coupure de pompe à eau selon la revendication 14, qui présente en outre un moyen pour transférer un couple nominal de l'arbre à la roue à aubes.

17. Embrayage de coupure de pompe à eau selon la revendication 16, dans lequel le moyen est un ressort en liaison par friction avec l'arbre et la roue à aubes.

18. Procédé pour actionner un embrayage de coupure de pompe à eau, présentant les étapes suivante :
fournir une première bague de roulement ayant un premier diamètre et un deuxième diamètre ;
fournir une deuxième bague de roulement avec des rampes dans la direction périphérique ;
fournir un premier élément de rouleau radialement entre la première bague de roulement et la deuxième bague de roulement ;
**caractérisé par** un déplacement axial de l'élément de rouleau d'une première position en contact avec le premier diamètre dans une deuxième position en contact avec le deuxième diamètre afin d'embrayer l'embrayage.

19. Procédé selon la revendication 16, dans lequel l'élément de rouleau est déplacé axialement par un thermostat à plaque à déclic.

20. Procédé selon la revendication 19, présentant en outre les étapes suivantes :
fournir une troisième bague de roulement ;
fournir un deuxième élément de rouleau radialement entre la deuxième bague de roulement et la troisième bague de roulement ;
et déplacer axialement la deuxième bague de roulement pour embrayer l'embrayage.

21. Embrayage de coupure de pompe à eau, présentant :
une première bague de roulement ;
une deuxième bague de roulement avec des rampes qui sont disposées dans la direction périphérique,
les rampes ayant un premier diamètre et un deuxième diamètre qui est décalé axialement par rapport au premier diamètre ;
un premier élément de rouleau qui est disposé radialement entre la première bague de roulement et la deuxième bague de roulement ;
et un moyen d'embrayage qui est disposé de manière à déplacer l'élément de rouleau axialement d'une première position à proximité du premier diamètre dans une deuxième position en contact avec le deuxième diamètre afin d'embrayer l'embrayage.
